# EUROPEAN PATENT APPLICATION

(11) **EP 4 672 505 A2**
(43) Date of publication of application: **31.12.2025**
(21) Application number: 25208861.2
(22) Date of filing: 15.10.2025
(51) Int. Cl.: H01R 3/00

(54) **PHOTOVOLTAIC CONNECTOR ASSEMBLY, PHOTOVOLTAIC MODULE, AND PHOTOVOLTAIC SYSTEM**

(30) Priority: 28.08.2025 CN 202511216521
(71) Applicant: Jinko Solar (Haining) Co., Ltd., Haining City, Zhejiang 314415 (CN)
(72) Inventor: ZHENG, Yichong, Haining, 314415 (CN); XIE, Yunfei, Haining, 314415 (CN); ZHANG, Dongqi, Haining, 314415 (CN); ZENG, Fanqi, Haining, 314415 (CN); CHEN, Yuxuan, Haining, 314415 (CN); LU, Jiaxing, Haining, 314415 (CN); GUAN, Yihuan, Haining, 314415 (CN); HU, Yue, Hsinchu, 314415 (CN); ZHANG, Bing, Haining, 314415 (CN); XU, Deke, Haining, 314415 (CN)
(74) Representative: Haseltine Lake Kempner LLP

(57) **Abstract**

Disclosed are a photovoltaic connector assembly (100a, 100b), a photovoltaic module (10) and a photovoltaic system. The photovoltaic connector assembly (100a, 100b) includes two connectors (110a and 110b, 110c and 110d) connected by plug-in connection, and at least one of the two connectors is a target connector (J1, J2). The target connector (J1, J2) includes a main body (111), a connecting member (112a, 112b), and a first sealing member (113). One end of the main body (111) is plugged in and connected to another connector of the two connectors. The first sealing member (113) has a through channel (1131). Overlapping projections of the main body (111) and the first sealing member (113) on a reference plane (E) and overlapping projections of the connecting member (112a, 112b) and the first sealing member (113) on the reference plane (E) at least partially overlap.

## Description

### TECHNICAL FIELD

The present application relates to the field of photovoltaic technology, and in particular to a photovoltaic connector assembly, a photovoltaic module, and a photovoltaic system.

### BACKGROUND

Connector assemblies are crucial components for transmitting electrical energy between different devices. In solar power generation scenarios, power transmission between photovoltaic modules is realized primarily depending on plug-in connector assemblies. However, being often exposed to outdoor environments year-round, the photovoltaic modules face numerous challenges. Strong winds or waves at sea may exert continuous forces on the connector assembly, subjecting sealing components in the connector assembly to significant external forces. Under these external forces, the sealing components are prone to deformation, displacement, or even breakage, thus compromising the sealing properties thereof. In this case, rain, moisture, and dust are allowed to enter the connector assembly, compromising the safety and reliability of the entire photovoltaic system.

### SUMMARY

In view of this, it is necessary to provide a photovoltaic connector assembly, a photovoltaic module, and a photovoltaic system.

According to one aspect of the present application, an embodiment of the present application provides a photovoltaic connector assembly, including two connectors connected by plug-in connection. At least one of the two connectors is a target connector, and the target connector includes: a main body, a connecting member, and a first sealing member. One end of the main body being plugged in and connected to another connector of the two connectors. A first internal thread being disposed on one of another end of the main body and the connecting member, and a first external thread being disposed on the other of the other end of the main body and the connecting member. The first sealing member has a through channel, wherein a second internal thread is disposed on an inner circumference surface of the through channel, and a second external thread is disposed on an outer circumference surface of the through channel. The second internal thread engages with the first external thread. The second external thread engages with the first internal thread, and the first sealing member is connected to the main body and the connecting member via threaded engagements, respectively. On any reference plane containing the axis of the through channel, an overlapping area of projections of the main body and the first sealing member at least partially overlaps an overlapping area of projections of the connecting member and the first sealing member. The interior of the main body, the interior of the connecting member, and the through channel collectively define a passage for passing a cable.

In some embodiments, a first protrusion is disposed on one of the second internal thread and the first external thread, and a first recess is formed on the other of the second internal thread and the first external thread, and the first protrusion and the first recess are engaged to form a snap-fit connection.

In some embodiments, the first protrusion is disposed on the second internal thread, and the first recess is disposed on the first external thread.

In some embodiments, the first protrusion is disposed at a crest of the second internal thread, and the first recess is disposed at a root of the first external thread.

In some embodiments, a second protrusion is disposed on one of the second external thread and the first internal thread, a second recess is disposed on the other of the second external thread and the first internal thread, and the second protrusion and the second recess are engaged to form a snap-fit connection.

In some embodiments, the second recess is disposed on the second external thread, and the second protrusion is disposed on the first internal thread.

In some embodiments, the second recess is disposed at a crest of the second external thread, and the second protrusion is disposed at a root of the first internal thread.

In some embodiments, a first protrusion is disposed on one of the second internal thread and the first external thread, and a first recess is formed on the other of the second internal thread and the first external thread. The first protrusion and the first recess are engaged to form a snap-fit connection. A second protrusion is disposed on one of the second external thread and the first internal thread, and a second recess is disposed on the other of the second external thread and the first internal thread. The second protrusion and the second recess are engaged to form a snap-fit connection.

In some embodiments, the first protrusion is disposed on the second internal thread, and the first recess is disposed on the first external thread. The second protrusion is disposed on the first internal thread, and the second recess is disposed on the second external thread. The second recess and the first protrusion are arranged in a one-to-one correspondence, and the first protrusion is formed by a depression of the second recess.

In some embodiments, the first recess is disposed on the second internal thread, and the first protrusion is disposed on the first external thread. The second recess is disposed on the first internal thread, and the second protrusion is disposed on the second external thread. The first recess and the second protrusion are arranged in a one-to-one correspondence, and the second protrusion is formed by a depression of the first recess.

In some embodiments, a thread direction of the second internal thread is opposite to a thread direction of the second external thread.

In some embodiments, the target connector further includes a water-blocking component disposed in the passage. The water-blocking component includes a base body and a plurality of water-blocking particles. The base body has a through-going accommodation cavity connected to the passage; the accommodation cavity is configured for passing the cable. The plurality of water-blocking particles are disposed inside the accommodation cavity.

In some embodiments, the base body is connected to a downstream side of the first sealing member in a direction pointing from the main body to the connecting member.

In some embodiments, the base body and the first sealing member are formed integrally.

In some embodiments, an opening is formed on a side of the base body facing away from the first sealing member, and the opening is connected to the accommodation cavity.

In some embodiments, the connecting member is configured as a nut, and the connecting member has a threaded section and a mating section provided therein sequentially in the direction pointing from the main body to the connecting member. The threaded section is provided with the first internal thread, and the other end of the main body is provided with the first external thread. The mating section is configured to accommodate at least a portion of the base body.

In some embodiments, the target connector further includes a second sealing member, and the second sealing member is disposed in the passage and located between an end wall of the connecting member and the base body.

In some embodiments, the water-blocking particle is made of material including silicone rubber, aluminum oxide, polyacrylamide, or polyvinyl alcohol.

In some embodiments, the accommodation cavity converges or diverges in a direction pointing from the main body to the connecting member, and a section of the accommodation cavity is perpendicular to the direction pointing from the main body to the connecting member.

In some embodiments, the two connectors are a first connector and a second connector. The first connector includes a first connector main body, and multiple buckle parts are disposed at one end of the first connector main body. The second connector includes a second connector main body, and multiple buckle holes are formed at one end of the second connector main body. The multiple buckle parts and the multiple buckle holes are engaged in a one-to-one correspondence. When the first connector is the target connector, the first connector main body is the main body. When the second connector is the target connector, the second connector main body is the main body, and the photovoltaic connector assembly further includes a third sealing member. The third sealing member engages with the multiple buckle parts in a preset manner to seal an interface between the first connector main body and the second connector main body when the first connector main body and the second connector main body are connected. The preset manner includes sleeving the third sealing member over the multiple buckle parts, or engaging the third sealing member with the multiple buckle parts via a plug-in connection.

In some embodiments, the third sealing member is elastic, and is in a stretched state when the first connector main body and the second connector main body are connected.

In some embodiments, the photovoltaic connector assembly further includes a fourth sealing member. The fourth sealing member is disposed at one end of the second connector main body to seal an interface between the first connector main body and the second connector main body when the first connector main body and the second connector main body are connected. The fourth sealing member is elastic, and has through holes engaging with the multiple buckle parts in a one-to-one correspondence, and the fourth sealing member is in a stretched state when the first connector main body and the second connector main body are connected.

In some embodiments, the first connector further includes a plugging part disposed at one end of the first connector main body. The plugging part and the multiple buckle parts are located at the same end of the first connector main body, and the multiple buckle parts are arranged around the plugging part. A plugging hole is further formed at one end of the second connector main body, and the plugging hole and the multiple buckle holes are located at the same end of the second connector main body. The multiple buckle holes are arranged around the plugging hole. The plugging hole engages with the plugging part via plug-in connection. The photovoltaic connector assembly further includes a fifth sealing member. The fifth sealing member is sleeved on the plugging part to seal an interface between the first connector main body and the second connector main body when the first connector main body and the second connector main body are connected.

According to another aspect of the application, a photovoltaic module is provided, including a photovoltaic cell module, and a photovoltaic junction box mounted on the photovoltaic cell module. At least one connector of the photovoltaic connector assembly of any one of the embodiments above is arranged and connected to the photovoltaic junction box.

According to still another aspect of the application, a photovoltaic system is provided, including the photovoltaic connector assembly of any one of the embodiments above, or at least two photovoltaic modules of any one of the embodiments above.

In the photovoltaic connector assembly, the photovoltaic module, and the photovoltaic system described above, the photovoltaic connector assembly includes at least two connectors connected by plug-in connection. By configuring at least one of the two connectors as the target connector, the first sealing member in the target connector is connected to the main body and the connecting member via threaded engagements, respectively. Since on any reference plane containing the axis of the through channel, the overlapping area of projections of the main body and the first sealing member at least partially overlaps the overlapping area of projections of the connecting member and the first sealing member, at least a portion of the first sealing member can be regarded as being sandwiched between the main body and the connecting member. In such a structure, an interface formed between the first sealing member and the main body, together with an interface formed between the first sealing member and the connecting member, constitutes multiple seals, thereby improving the sealing performance at a connection region between the main body and the connecting member. Since the main body and the connecting member are connected via threaded engagements with the first sealing member, a buffering effect against vibration or impact can be achieved through a friction between mating surfaces of the first sealing member and the main body, a friction between mating surfaces of the first sealing member and the connecting member, and an elastic deformation of the mating surfaces of the first sealing member, thus forming a distributed load that is transmitted in a graded manner, thereby reducing the risk of failure under complex working conditions such as dynamic loads and temperature fluctuations, and further helping to improve the sealing performance at the connection region between the main body and the connecting member.

Additional aspects and advantages of the embodiments of the present invention will be described in part in the description below, and other part will become apparent from the description below or will be learned from the implements of the embodiments of the present invention.

### DESCRIPTION OF THE DRAWINGS

Various additional advantages and benefits will become apparent to those of ordinary skill in the art from reading the following detailed description of the embodiments. The drawings are only for the purpose of illustrating the embodiments but not to be considered as limitations on the present application. Moreover, throughout the drawings, the same reference numerals are used to denote the same parts. In the accompanying drawings:
FIG. 1 is a schematic structural view of a photovoltaic connector assembly according to some embodiments of the present application;
FIG. 2 is a partially exploded schematic view of the photovoltaic connector assembly according to some embodiments of the present application;
FIG. 3 is a schematic structural view of parts of a first connector according to some embodiments of the present application;
FIG. 4 is a schematic structural view of parts of a second connector according to some embodiments of the present application;
FIG. 5 is a partial sectional structural view of a connecting member according to some embodiments of the present application;
FIG. 6 is a schematic structural view of a first sealing member according to some embodiments of the present application;
FIG. 7 is a schematic sectional view of the first sealing member according to some embodiments of the present application;
FIG. 8 is a schematic sectional view of engagement portions of a main body, the connecting member and the first sealing member according to some embodiments of the present application;
FIG. 9 is a schematic view showing a projection relationship between the main body, the connecting member and the first sealing member according to some embodiments of the present application;
FIG. 10 is a schematic structural view of a photovoltaic connector assembly according to other embodiments of the present application;
FIG. 11 is a partially exploded schematic view of a photovoltaic connector assembly according to other embodiments of the present application;
FIG. 12 is a sectional structural view of a photovoltaic connector assembly according to other embodiments of the present application;
FIG. 13 is a schematic sectional view of engagement portions of the main body, the connecting member, the first sealing member, and a water-blocking component according to other embodiments of the present application;
FIG. 14 is a sectional view showing a cooperation of the first sealing member and the water-blocking component according to other embodiments of the present application;
FIG. 15 is a sectional view showing a cooperation of the first sealing member and the water-blocking component according to other embodiments of the present application;
FIG. 16 is a structural view showing a photovoltaic connector assembly according to other embodiments of the present application, with the first connector and the second connector not connected to each other;
FIG. 17 is a partial enlarged schematic view of region G in FIG. 12;
FIG. 18 is a schematic structural view of a third sealing member according to some embodiments of the present application;
FIG. 19 is a schematic structural view of a fourth sealing member according to some embodiments of the present application;
FIG. 20 is a partial enlarged sectional view showing a plug-type engagement region between the first connector and the second connector according to still other embodiments of the present application;
FIG. 21 is a schematic structural view of a photovoltaic module according to some embodiments of the present application.

### Reference numerals:

photovoltaic module 10, photovoltaic cell module 11, photovoltaic junction box 12;
photovoltaic connector assembly 100a, 100b;
first connector 110a, 110c, first connector main body 111a, buckle part 116a, plugging part 117a, socket 118a, second connector 110b, 110d, second connector main body 111b, buckle hole k2, plugging hole k5, pin 118b, target connector J1, J2, main body 111, connecting member 112a, 112b, threaded section 1121, mating section 1122, end wall 1123, first sealing member 113, through channel 1131, water-blocking component 114a, 114b, base body 141a, 1141b, accommodation cavity Q, opening k1, water-blocking particle 1142, second sealing member 115;
third sealing member 120, socket k3;
fourth sealing member 130, through hole k4;
fifth sealing member 140a, 140b;
first internal thread 1101, first external thread 1102, second internal thread 1132, second external thread 1133, first protrusion 1103, first recess 1104, second protrusion 1105, second recess 1106;
cable 200;
reference plane E, first projection y1, second projection y2.

### DETAILED DESCRIPTION OF THE EMBODIMENTS

In order to make the above objectives, features and advantages of the present application clearer and to be better understood, specific implementations of the present application are described in detail below with reference to the accompanying drawings. In the following description, many specific details are set forth to make the present application to be fully understood. However, the present application can be implemented in many other ways different from those described herein, and those skilled in the art can make similar improvements without departing from the connotation of the present application. Therefore, the present application is not limited by the specific embodiments disclosed below.

In the description of the present application, it should be understood that if the terms "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", etc. appear, the orientation or position relationships indicated by these terms are based on the orientation or position relationships shown in the accompanying drawings and are merely intended to facilitate the description of the present application and simplify the description, rather than indicating or implying that the indicated device or element must have a particular orientation or be constructed and operated in a particular orientation, and therefore are not to be interpreted as limitation on the present application.

In addition, if the terms "first" and "second", etc., appear, these terms are used for descriptive purposes only but cannot be interpreted as indicating or implying relative importance or implicitly specifying the number of indicated technical features. Thus, the features defined as "first" and "second" may explicitly or implicitly include at least one of these features. In the description of the present application, if the term "plurality" appears, the "plurality" means at least two, such as two, three, etc., unless otherwise clearly and specifically defined.

In the present application, unless otherwise clearly specified and limited, if the terms "mount", "connection", "communication", "fix", etc., appear, these terms should be understood in a broad sense, for example, may be a fixed connection or a detachable connection, or an integrated connection; or may be a mechanical connection or an electrical connection; or may be a direct connection or an indirect connection through an intermediate medium; or may be an internal communication between two elements or an interaction relationship between two elements, unless otherwise clearly defined. Those of ordinary skill in the art can understand the specific meanings of the above terms in the present application according to specific situations.

In the present application, unless otherwise clearly specified and limited, if there is a description that a first feature is "above" or "under" a second feature, etc., or similar description, it may mean that the first and second features are in direct contact, or the first and second features are in indirect contact through an intermediate medium. Moreover, the first feature being "on top of", "above" and "over" the second feature may mean that the first feature is directly above or obliquely above the second feature, or simply means that the horizontal height of the first feature is greater than that of the second feature. The first feature being "under", "beneath" and "below" the second feature may mean that the first feature is directly below or obliquely below the second feature, or simply means that the horizontal height of the first feature is less than the second feature.

It should be noted that if an element is referred to as being "fixed to" or "disposed on" another element, it may be directly on the other element or there may also be an intermediate element. If an element is considered to be "connected to" another element, it may be directly connected to the other element or there may be an intermediate element as well. If present, the terms "vertical", "horizontal", "upper", "lower", "left", "right" and similar expressions used in the present application are only for illustrative purposes but not intended to be the only implementation.

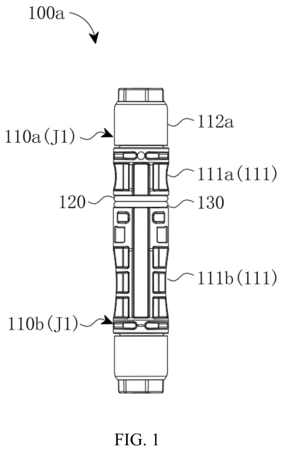

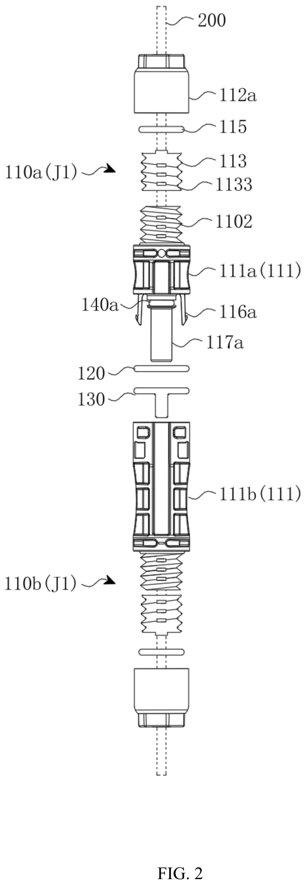

According to some embodiments of the present application, referring to FIG. 1 and FIG. 2, FIG. 1 is a schematic structural view of a photovoltaic connector assembly 100a according to some embodiments of the present application, and FIG. 2 is a partially exploded schematic view of the photovoltaic connector assembly 100a according to some embodiments of the present application. In embodiments of the present application, the photovoltaic connector assembly 100a is provided, including two connectors connected by plug-in connection, and at least one of the two connectors is a target connector J1. In the present application, the target connector refers to one connector specifically limited and described in the photovoltaic connector assembly.

The two connectors are a first connector 110a and a second connector 110b. The two connectors are mated, which means one connector is a male connector and the other is a female connector. In the embodiments of the present application, referring to FIGS. 1 and 2, the first connector 110a is a male connector and the second connector 110b is a female connector. The first connector 110a and/or the second connector 110b are target connectors J1. FIGS. 1 and 2 illustrate a case where both the first connector 110a and the second connector 110b are target connectors J1.

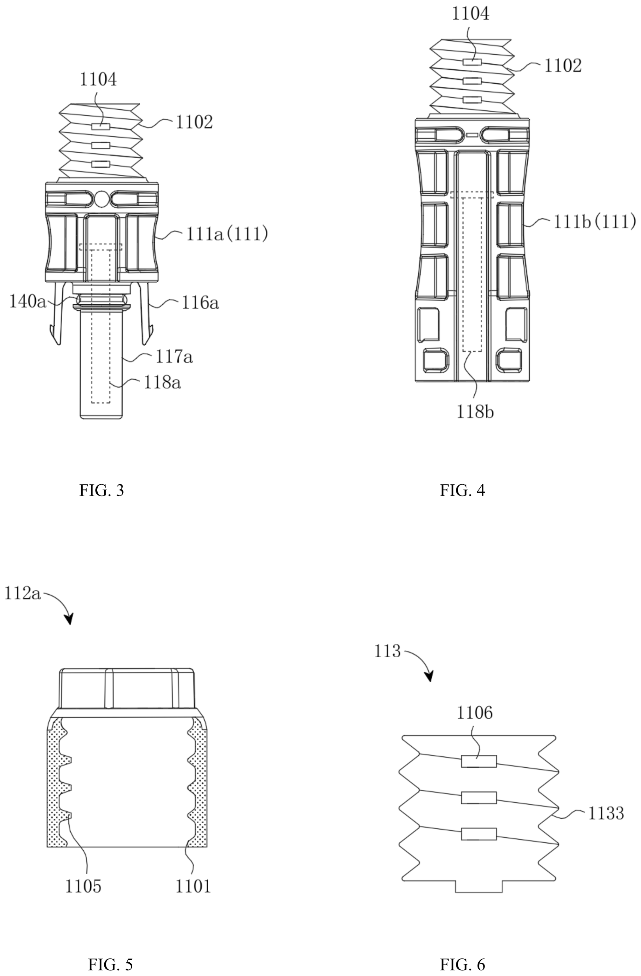

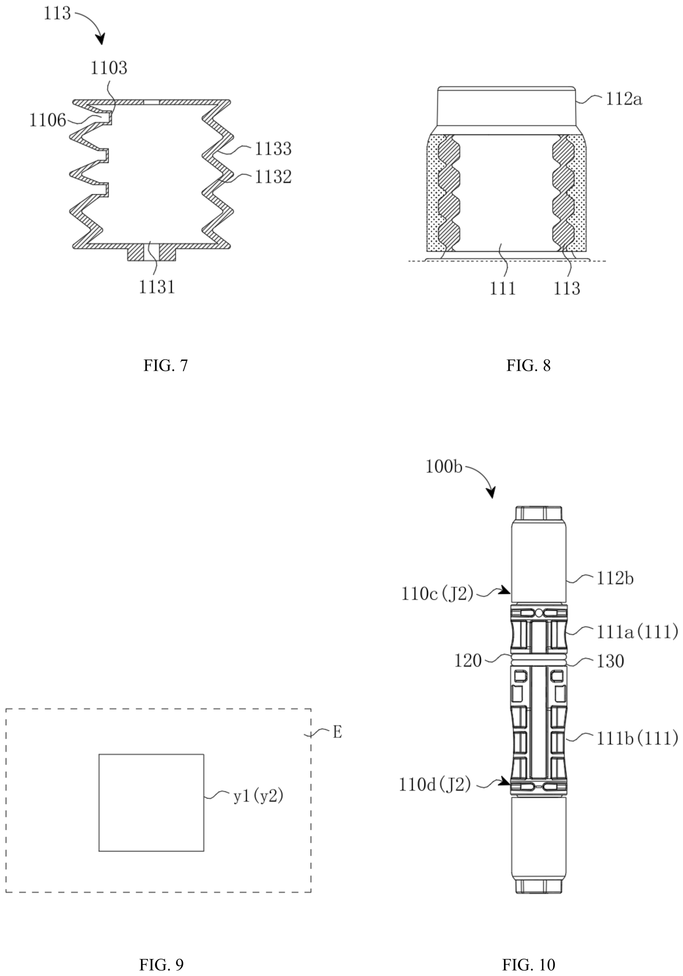

Referring to FIGS. 3 to 8, FIG. 3 is a schematic structural view of parts of the first connector 110a according to some embodiments of the present application, FIG. 4 is a schematic structural view of parts of the second connector 110b according to some embodiments of the present application, FIG. 5 is a partial sectional structural view of a connecting member 112a according to some embodiments of the present application, FIG. 6 is a schematic structural view of a first sealing member 113 according to some embodiments of the present application, FIG. 7 is a schematic sectional view of the first sealing member 113 according to some embodiments of the present application, and FIG. 8 is a schematic sectional view of engagement portions of a main body 111, the connecting member 112a and the first sealing member 113 according to some embodiments of the present application. The target connector J1 includes the main body 111, the connecting member 112a and the first sealing member 113. One end of the main body 111 is plugged in and connected to another connector. A first internal thread 1101 is disposed on one of the other end of the main body 111 and the connecting member 112a, and a first external thread 1102 is disposed on the other of the other end of the main body 111 and the connecting member 112a. The other connector is the connector other than the one including the main body 111. In an embodiment, as shown in FIG. 5, the first internal thread 1101 is disposed on the connecting member 112a, and as shown in FIGS. 2-4, the first external thread 1102 is disposed on the other end of the main body 111. A through channel 1131 (shown in FIG. 7) is formed in the first sealing member 113, a second internal thread 1132 is disposed on the inner circumference surface of the through channel 1131, and a second external thread 1133 is disposed on the outer circumference surface of the through channel 1131. The second internal thread 1132 engages with the first external thread 1102, and the second external thread 1133 engages with the first internal thread 1101, so that the first sealing member 113 is connected to the main body 111 and the connecting member 112a via threaded engagements, respectively.

Exemplarily, referring to FIGS. 3 and 4, the first connector 110a includes a first connector main body 111a, and the second connector 110b includes a second connector main body 111b. When the first connector 110a is the target connector J1, the first connector main body 111a is the main body 111. When the second connector 110b is the target connector J1, the second connector main body 111b is the main body 111. When both the first connector 110a and the second connector 110b are the target connectors J1, the first connector 110a and the second connector 110b have identical structures except for the plug-in connection structures. That is, the plug-in engagement ends of the first connector main body 111a and the second connector main body 111b have different structures, and the way in which the first connector main body 111a, the connecting member 112a, and the first sealing member 113 engage with each other is the same as the way in which the second connector main body 111b, the connecting member 112a, and the first sealing member 113 engage with each other.

Exemplarily, as shown in FIGS. 3 and 4, the first connector main body 111a and the second connector main body 111b each are provided with the first external thread 1102. As shown in FIG. 5, the connecting member 112a is provided with the first internal thread 1101. Alternatively, the first connector main body 111a and the second connector main body 111b each are provided with the first internal thread 1101, while the connecting member 112a is provided with the first external thread 1102, which is not specifically limited herein.

Continuing to refer to FIG. 8 and FIG. 9, FIG. 9 is a schematic view showing a projection relationship between the main body 111, the connecting member 112a and the first sealing member 113 according to some embodiments of the present application. On any reference plane E containing the axis of the through channel 1131, an overlapping area of projections of the main body 111 and first sealing member 113 at least partially overlaps an overlapping area of projections of the connecting member 112a and the first sealing member 113. The interior of the main body 111, the interior of the connecting member 112a, and the through channel 1131 collectively define a passage for passing a cable 200. To illustrate a cooperation between the cable 200 and the photovoltaic connector assembly 100a, the cable 200 is illustrated in dashed lines in FIG. 2. The cable 200 is also illustrated in dashed lines in the related structures of the photovoltaic connector assembly illustrated hereinafter, which will not be repeatedly described.

Exemplarily, as shown in FIG. 8 and FIG. 9, the overlapping area of projections of the main body 111 and the first sealing member 113 on the reference plane E is the first projection y1, and the overlapping area of projections of the connecting member 112a and the first sealing member 113 on the reference plane E is the second projection y2, and the first projection y1 and the second projection y2 completely overlap. That is, referring to FIG. 5 and FIG. 8, when the connecting member 112a is provided with the first internal thread 1101, the first sealing member 113 is located inside the connecting member 112a, and a portion of the main body 111 connected to the first sealing member 113 is also located inside the connecting member 112a. When the main body 111 is provided with the first internal thread 1101, the structures are correspondingly changed and not repeatedly described herein.

In this way, by configuring at least one of the two connectors as the target connector J1, the first sealing member 113 in the target connector J1 is connected to the main body 111 and the connecting member 112a via threaded engagements, respectively. Since on any reference plane E containing the axis of the through channel 1131, the overlapping area of projections of the main body 111 and the first sealing member 113 at least partially overlaps the overlapping area of projections of the connecting member 112a and the first sealing member 113, at least a portion of the first sealing member 113 can be regarded as being sandwiched between the main body 111 and the connecting member 112a. In such a structure, an interface formed between the first sealing member 113 and the main body 111, together with an interface formed between the first sealing member 113 and the connecting member 112a, constitutes multiple seals, thereby improving the sealing performance at a connection region between the main body 111 and the connecting member 112a. Since the main body 111 and the connecting member 112a are connected via threaded engagements with the first sealing member 113, a buffering effect against vibration or impact can be achieved through a friction between mating surfaces of the first sealing member 113 and the main body 111, a friction between mating surfaces of the first sealing member 113 and the connecting member 112a, and an elastic deformation of the mating surfaces of the first sealing member 113, thus forming a distributed load that is transmitted in a graded manner, thereby reducing the risk of failure under complex working conditions such as dynamic loads and temperature fluctuations, and further helping to improve the sealing performance at the connection region between the main body 111 and the connecting member 112a.

According to some embodiments of the present application, continuing to refer to FIGS. 2 to 4, and FIGS. 6 to 7, a first protrusion 1103 is disposed on one of the second internal thread 1132 and the first external thread 1102, and a first recess 1104 is formed on the other of the second internal thread 1132 and the first external thread 1102. The first protrusion 1103 and the first recess 1104 are engaged to form a snap-fit connection.

Exemplarily, FIG. 7 shows the case where the first protrusion 1103 is disposed on the second internal thread 1132, and FIG. 3 and FIG. 4 show the case where the first recess 1104 is formed on the first external thread 1102.

A quantity of the first protrusions 1103 and a quantity of the first recesses 1104 each may be one, two, four, or another number, which is not specifically limited herein. When the quantity of the first protrusions 1103 and the quantity of the first recesses 1104 both are multiple, all the first protrusions 1103 may be arranged at intervals along the axial direction of the corresponding thread structure, or may be arranged at intervals around the circumference of the corresponding thread structure, or may be arranged at intervals on the corresponding thread structure. The first recesses 1104 are arranged with the first protrusions 1103 in a one-to-one correspondence, which is not specifically limited herein.

In this way, by arranging the first protrusion 1103 and the first recess 1104, an anti-disengagement structure is formed by the snap-fit engagement of the first protrusion 1103 and the first recess 1104. When the first external thread 1102 and the second internal thread 1132 are subjected to a vibration, an impact, or an axial force, the physical restraint of the first protrusion 1103 and the first recess 1104 directly prevents a relative rotation between the first external thread 1102 and the second internal thread 1132, thereby ensuring that the first external thread 1102 and the second internal thread 1132 engages with each other more tightly, and improving connection reliability and sealing reliability. Furthermore, since the first protrusion 1103 and the first recess 1104 are both arranged on corresponding threaded structures, manufacturing is also facilitated.

According to some embodiments of the present application, referring to FIGS. 2 to 4, and FIGS. 6 to 7, the first protrusion 1103 is disposed on the second internal thread 1132, and the first recess 1104 is disposed on the first external thread 1102. Specifically, the first protrusion 1103 is disposed at the crest of the second internal thread 1132, and the first recess 1104 is formed at the root of the first external thread 1102.

The crest is the top of the raised part in the thread profile. The root is the bottom of the recessed part between two adjacent crests in the thread profile.

The crest of the second internal thread 1132 and the root of the first external thread 1102 are the primary load-bearing contact surfaces. Under an axial load, a force is transmitted through the thread flanks. The first protrusion 1103 arranged at the crest of the second internal thread 1132 and the first recess 1104 formed at the root of the first external thread 1102 enable a snap-lock structure to be formed by a snap-fit engagement of the first protrusion 1103 and the first recess 1104 to directly play functions on the stress concentration region. When the threads tend to loosen, this snap-lock structure directly blocks a relative rotation along the force transmission path more quickly. Compared with a structure that the first protrusion 1103 and the first recess 1104 are arranged on the thread flanks of the corresponding thread structures, the structure that the first protrusion 1103 is arranged at the crest of the second internal thread 1132 and the first recess 1104 is formed at the root of the first external thread 1102 can further maintain a complete contact area of the thread flanks, thereby improving the thread's load-bearing capacity. Therefore, by positioning the first protrusion 1103 and the first recess 1104, more precise locking and more stable anti-loosening can be achieved while maintaining thread strength and facilitating machining.

According to some embodiments of the present application, referring to FIG. 2, and FIGS. 5 to 7, a second protrusion 1105 (shown in FIG. 5) is disposed on one of the second external thread 1133 and the first internal thread 1101, and a second recess 1106 is disposed on the other of the second external thread 1133 and the first internal thread 1101. The second protrusion 1105 and the second recess 1106 are engaged to form a snap-fit connection.

The related implementations of the second protrusion 1105 and the second recess 1106 can be understood with reference to the related implementations of the first protrusion 1103 and the first recess 1104 described above, which are not described repeatedly herein.

In this way, by providing the second protrusion 1105 and the second recess 1106, and utilizing the snap-fit second protrusion 1105 and the second recess 1106, an anti-disengagement structure is formed. When the second external thread 1133 and the first internal thread 1101 are subjected to a vibration, an impact, or an axial force, the physical restraint of the second protrusion 1105 and second recess 1106 directly prevents a relative rotation of the second external thread 1133 and the first internal thread 1101, thereby ensuring a tighter fit between the second external thread 1133 and the first internal thread 1101, and improving the connection reliability and the sealing reliability. Furthermore, since the second protrusion 1105 and the second recess 1106 are both disposed on corresponding threaded structures, manufacturing is also facilitated.

According to some embodiments of the present application, continuing to refer to FIGS. 2, 5, and 7, the second recess 1106 is disposed on the second external thread 1133, and the second protrusion 1105 is disposed on the first internal thread 1101. Specifically, the second recess 1106 is disposed at the crest of the second external thread 1133, and the second protrusion 1105 is disposed at the root of the first internal thread 1101.

The related implementations of the second protrusion 1105 and the second recess 1106 can be understood with reference to the related implementations of the first protrusion 1103 and the first recess 1104 described above, which are not described repeatedly herein.

By positioning the second recess 1106 on the crest of the second external thread 1133 and positioning the second protrusion 1105 on the root of the first internal thread 1101, a snap-lock structure is formed by a snap-fit engagement of the second protrusion 1105 and the second recess 1106 to directly play functions on the stress concentration region. When the threads tend to loosen, this snap-lock structure directly blocks a relative rotation along the force transmission path more quickly. Compared with a structure that the second protrusion 1105 and the second recess 1106 are disposed on the thread flanks of the corresponding thread structures, the structure that the second recess 1106 is formed on the crest of the second external thread 1133 and the second protrusion 1105 is disposed on the root of the first internal thread 1101 can further maintain a complete contact area of the thread flanks, thereby improving the thread's load-bearing capacity. Therefore, by positioning the second protrusion 1105 and the second recess 1106, more precise locking and more stable anti-loosening can be achieved while maintaining thread strength and facilitating processing.

According to some embodiments of the present application, continuing to refer to FIGS. 2 to 7, the first protrusion 1103 is disposed on one of the second internal thread 1132 and the first external thread 1102, and the first recess 1104 is disposed on the other of the second internal thread 1132 and the first external thread 1102. The first protrusion 1103 and the first recess 1104 are engaged to form a snap-fit connection. The second protrusion 1105 is disposed on one of the second external thread 1133 and the first internal thread 1101, and the second recess 1106 is disposed on the other of the second external thread 1133 and the first internal thread 1101. The second protrusion 1105 and the second recess 1106 are engaged to form a snap-fit connection.

By respectively providing matching recesses and protrusions on the interface between the first sealing member 113 and the main body 111 and on the interface between the first sealing member 113 and the connecting member 112a, a multiple-stage anti-disengagement structure is formed. Since at least a portion of the first sealing member 113 can be regarded as being sandwiched between the main body 111 and the connecting member 112a, with reference to FIG. 8, the first sealing member 113, the main body 111 and the connecting member 112a roughly constitute an integrated structure through the engagement of the corresponding threaded structures. When there is a loosening tendency between the second internal thread 1132 and the first external thread 1102 or between the second external thread 1133 and the first internal thread 1101, the snap-lock structure formed by the first protrusion 1103 and the first recess 1104 and the snap-lock structure formed by the second protrusion 1105 and the second recess 1106 can interact with each other, thereby jointly enhancing the tightness and stability of the connection between the first sealing member 113, the main body 111 and the connecting member 112a.

According to some embodiments of the present application, continuing to refer to FIGS. 2 to 7, when the first protrusion 1103 is disposed on the second internal thread 1132 and the first recess 1104 is disposed on the first external thread 1102, the second protrusion 1105 is disposed on the first internal thread 1101 and the second recess 1106 is disposed on the second external thread 1133. The second recess 1106 and the first protrusion 1103 are arranged in a one-to-one correspondence, and the first protrusion 1103 is formed by a depression of the second recess 1106. Alternatively, when the first recess 1104 is disposed on the second internal thread 1132 and the first protrusion 1103 is disposed on the first external thread 1102, the second recess 1106 is disposed on the first internal thread 1101, and the second protrusion 1105 is disposed on the second external thread 1133. The first recess 1104 and the second protrusion 1105 are arranged in a one-to-one correspondence, and the second protrusion 1105 is formed by a depression of the first recess 1104.

Exemplarily, as shown in FIGS. 2 to 7, the second protrusion 1105 is disposed on the first internal thread 1101, the first recess 1104 is disposed on the first external thread 1102, the first protrusion 1103 is disposed on the second internal thread 1132, and the second recess 1106 is disposed on the second external thread 1133. The first protrusion 1103 is formed by the depression of the second recess 1106.

As the first protrusion 1103 is formed by the depression of the second recess 1106, or the second protrusion 1105 is formed by the depression of the first recess 1104, the inner wall and the outer wall of the first sealing member 113 form an inner and outer complementary structure. When any one of the first sealing member 113, the main body 111, and the connecting member 112a is subjected to an applied force, the protrusions and the recesses on the inner and outer walls of the first sealing member 113 form a mutually supporting structure, thereby improving the overall anti-deformation ability of the first sealing member 113, the main body 111, and the connecting member 112a, and further improving the stability, sealing performance, and reliability of the overall structure. Moreover, by forming the protrusions through the depression of the corresponding recesses, assembly complexity can be reduced, thereby making installation easier. In addition, in conjunction with the structure of positioning the corresponding protrusions and recesses on the roots and crests as described in some of the aforementioned embodiments, the stability, the sealing performance, and the reliability of the overall structure can be further improved.

According to some embodiments of the present application, continuing to refer to FIGS. 2 to 8, the thread direction of the second internal thread 1132 is opposite to the thread direction of the second external thread 1133 (shown in FIG. 7).

Exemplarily, the thread direction of the second internal thread 1132 is right-handed, and the thread direction of the second external thread 1133 is left-handed. Alternatively, the thread direction of the second internal thread 1132 is left-handed, and the thread direction of the second external thread 1133 is right-handed. The thread direction of the first external thread 1102 is the same as the thread direction of the second internal thread 1132, and the thread direction of the first internal thread 1101 is the same as the thread direction of the second external thread 1133.

Referring to FIGS. 2 to 8, taking the left-handed second internal thread 1132 and the right-handed second external thread 1133 as an example, when the connecting member 112a has a tendency to loosen clockwise, the first sealing member 113 will be subjected to a clockwise torque, but the second internal thread 1132 of the first sealing member 113 is left-handed, which will generate a counterclockwise torque on the main body 111. The clockwise torque and the counterclockwise torque have opposite torque directions and can offset part of the loosening force, thereby reducing the risk of overall loosening. In this way, by configuring the thread direction of the second internal thread 1132 to be opposite to the thread direction of the second external thread 1133, a reverse constraint can be formed when there is a loosening tendency. In conjunction with the anti-disengagement structure formed by the corresponding protrusions and recesses mentioned above, the opposite thread directions prevent loosening, while corresponding protrusions and recesses provide physical locking, together forming a multi-stage structure that can enhance reliability. When the photovoltaic connector assembly 100a is subjected to complex stress environments, the sealing performance, reliability and stability of the photovoltaic connector assembly 100a can still be improved.

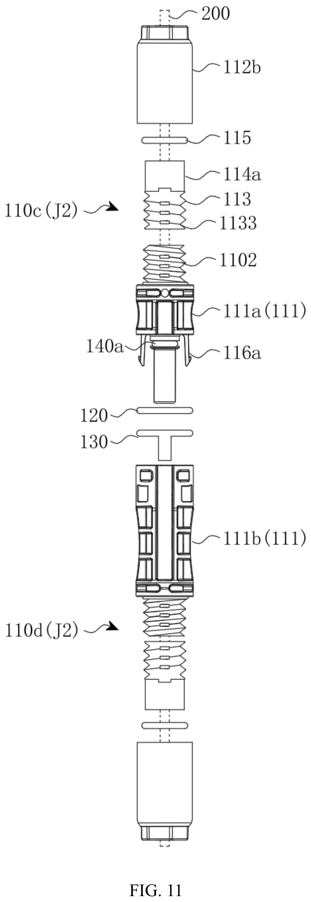

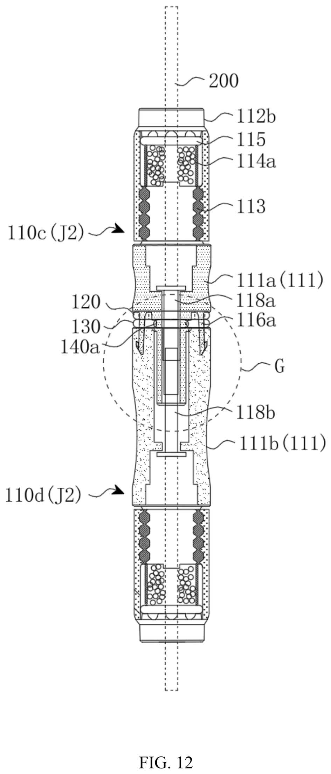

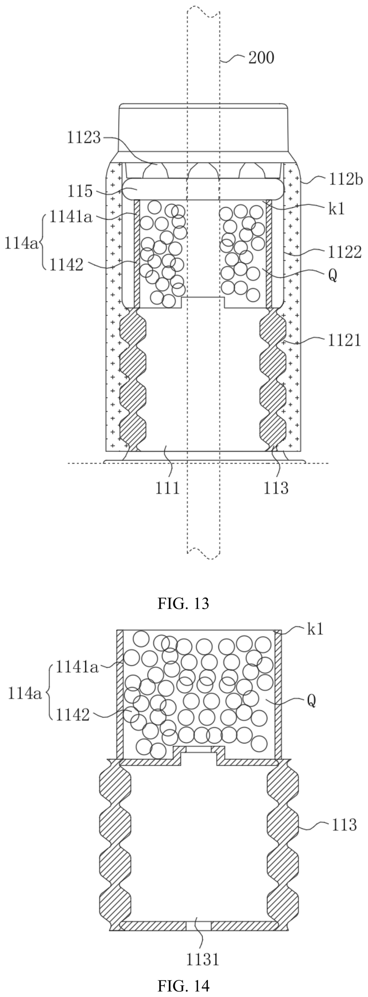

According to some embodiments of the present application, referring to FIGS. 10 to 13, FIG. 10 is a schematic structural view of a photovoltaic connector assembly 100b according to other embodiments of the present application, FIG. 11 is a partially exploded schematic view of the photovoltaic connector assembly 100b according to other embodiments of the present application, FIG. 12 is a sectional structural view of the photovoltaic connector assembly 100b according to other embodiments of the present application, FIG. 13 is a schematic sectional view of engagement portions of the main body 111, the connecting member 112b, the first sealing member 113, and a water-blocking component 114a according to other embodiments of the present application. The target connector J2 also includes a water-blocking component 114a (shown in FIG. 13) disposed in the passage. The water-blocking component 114a includes a base body 1141a and a plurality of water-blocking particles 1142. The base body 1141a has a through-going accommodation cavity Q which is connected to the passage. The accommodation cavity Q is configured for passing the cable 200. The plurality of water-blocking particles 1142 are disposed inside the accommodation cavity Q.

Exemplarily, FIG. 10 illustrates a case where both the first connector 110c and the second connector 110d are the target connectors J2. Each target connector J2 has the same structure as the target connector J1, which is not described repeatedly herein.

The water-blocking particles 1142 are configured for preventing water and moisture from entering the interior of the cable 200, thereby protecting the structure of the cable 200. The water-blocking particles 1142 each are in a granular shape.

When the cable 200 passes through the accommodation cavity Q, the water-blocking particles 1142 fill the region surrounding a portion of the cable 200 located within the accommodation cavity Q. The gaps between the water-blocking particles 1142 form curved paths. When entering the accommodation cavity Q, the water vapor is not only absorbed by the water-blocking particles 1142, but also prevented by the curved paths from penetrating along the longitudinal direction of the cable 200. When the photovoltaic connector assembly is subjected to external forces, the gaps between the water-blocking particles 1142 function as buffer spaces, and stresses can be adjusted and distributed through slight displacement and stacking of the water-blocking particles 1142, so that not only the stability of the overall structure can be enhanced, but also the water-blocking particles 1142 can adapt to changes in the shape of the cable 200, thereby enabling the water-blocking particles 1142 to be in contact with the cable 200, and further protecting the cable 200.

According to some embodiments of the present application, continuing to refer to FIG. 11 to FIG. 13, the base body 1141a is connected to a downstream side of the first sealing member 113 in a direction pointing from the main body 111 to the connecting member 112b.

In this way, the water-blocking component 114a is located at the downstream side of the first sealing member 113, thereby blocking water and moisture at the downstream side of the first sealing member 113, reducing the risk of water and moisture entering from the downstream side of the first sealing member 113, and further improving the reliability and the sealing performance at the connection between the first sealing member 113, the connecting member 112b, and the main body 111. In addition, when the first sealing member 113, the connecting member 112b, and the main body 111 are connected, the water-blocking component 114a can be squeezed, so that the water-blocking component 114a can be more tightly fitted between the connecting member 112b and the first sealing member 113, thereby further improving the water-blocking effect.

According to some embodiments of the present application, continuing to refer to FIG. 11 to FIG. 13, and in combination with FIG. 14, FIG. 14 is a sectional view showing a cooperation of the first sealing member 113 and the water-blocking component 114a according to other embodiments of the present application, and the base body 1141a and the first sealing member 113 are formed integrally.

As the base body 1141a and first sealing member 113 are an integrally formed structure, there is no physical interface therebetween, thereby avoiding a problem of gap caused by assembly errors, and forming a continuous and complete sealing structure, thus improving the sealing effect. Furthermore, by integrally forming the base body 1141a and the first sealing member 113, the base body 1141a and the first sealing member 113 form a single unit with more uniform mechanical properties, thereby improving structural rigidity and deformation resistance, and reducing the risk of failure caused by separation between the base body 1141a and the first sealing member 113. Furthermore, the manufacturing process can be simplified, thereby improving production efficiency.

According to some embodiments of the present application, referring to FIG. 11 to FIG. 14, an opening k1 is formed on a side of the base body 1141a facing away from the first sealing member 113, and the opening k1 is connected to the accommodation cavity Q (labelled in FIG. 13 and FIG. 14).

Such a structure not only facilitates the assembly of the cable 200, but also allows the side of the base body 1141a facing away from the first sealing member 113 to directly abut against the connecting member 112b. Thus, during the assembly process, the deformation of the base body 1141a can be utilized, allowing the base body 1141a to more tightly wrap the portion of the cable 200 located in the accommodation cavity Q, thereby improving the water-blocking effect.

According to some embodiments of the present application, referring to FIGS. 11 to 14, the connecting member 112b is configured as a nut. The connecting member 112b has a threaded section 1121 and a mating section 1122 (shown in FIG. 13) sequentially provided therein in the direction pointing from the main body 111 to the connecting member 112b. The threaded section 1121 is provided with the first internal thread 1101, while the other end of the main body 111 is provided with the first external thread 1102 (shown in FIG. 11). The mating section 1122 is configured to accommodate at least a portion of the base body 1141a (shown in FIG. 13).

In this way, the mating section 1122 is disposed inside the connecting member 112b, which not only makes it convenient to install the water-blocking component 114a, but also makes it convenient for the mating section 1122 to accommodate the deformation of the base body 1141a to achieve a more tightly fitting structure, thereby improving the sealing performance and the water-blocking effect.

According to some embodiments of the present application, referring to FIGS. 11 to 13, the target connector J2 further includes a second sealing member 115. The second sealing member 115 is disposed in the passage and is located between the end wall 1123 of the connecting member 112b and the base body 1141a.

Exemplarily, the second sealing member 115 is a ring-shaped component.

In this way, by providing the second sealing member 115 between the end wall 1123 of the connecting member 112b and the base body 1141a, the water-blocking performance is further improved. In addition, since the base body 1141a can directly abut against the second sealing member 115, the deformation of the base body 1141a can be accommodated by the second sealing member 115 to enhance the sealing performance at the interface between the second sealing member 115 and the substrate.

Of course, in the aforementioned schematic views of FIG. 1 and FIG. 2, the second sealing member 115 may also be provided, and the second sealing member 115 is disposed between the first sealing member 113 and the end wall of the connecting member 112a (as shown in FIG. 2).

According to some embodiments of the present application, referring to FIG. 13 and FIG. 14, the material of the water-blocking particle 1142 includes silicone rubber, aluminum oxide, polyacrylamide, or polyvinyl alcohol.

Silicone rubber has excellent weather resistance, stability, and elastic deformation capabilities, which allows the silicone rubber to be deformed to tightly wrap the cable 200 while blocking water, improving the tight fit between the corresponding components and thus enhancing the sealing performance.

Aluminum oxide has good strength, wear resistance and stability, thus improving the strength and stability of the whole structure while blocking water.

Polyacrylamide has high water absorption and expansion properties, thus improving the tightness between the water-blocking particles 1142 and the cable 200 while blocking water.

Polyvinyl alcohol has controllable water absorption and film-forming properties, and exhibits dual functions of expansion sealing and blocking moisture penetration.

In this way, the material of the water-blocking particles 1142 can be flexibly selected and is not specifically limited herein.

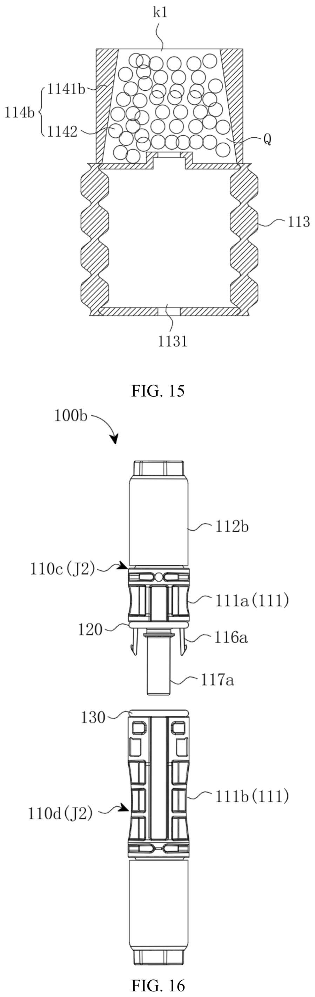

According to some embodiments of the present application, referring to FIG. 15, FIG. 15 is a sectional view showing a cooperation of the first sealing member 113 and the water-blocking component 114b according to other embodiments of the present application. In the direction pointing from the main body 111 to the connecting member 112b, the sectional area of the accommodation cavity Q formed by the base body 1141b gradually decreases or increases, that is, the accommodation cavity (Q) converges or diverges. The section of the accommodation cavity Q is perpendicular to the direction pointing from the main body 111 to the connecting member 112b.

In this way, when the photovoltaic connector assembly is subjected to external forces, the stress can be distributed by utilizing the inner wall of the accommodation cavity Q of the water-blocking component 114b, thereby further enhancing the structural reliability of the photovoltaic connector assembly.

Referring to FIG. 13, in such a structure, through the deformation of the second sealing member 115, the water-blocking particles 1142, and the base body 1141a, through the cooperation of the first sealing member 113 with the main body 111 and the connecting member 112b, respectively, and through the cooperation of the corresponding protrusions and recesses illustrated in some of the aforementioned embodiments, not only a multi-barrier water-blocking structure is formed to extend the water-blocking path, but also the mutual cooperation of the various components improves the overall structural stability, thereby achieving better sealing performance when the photovoltaic connector assembly is subjected to external forces.

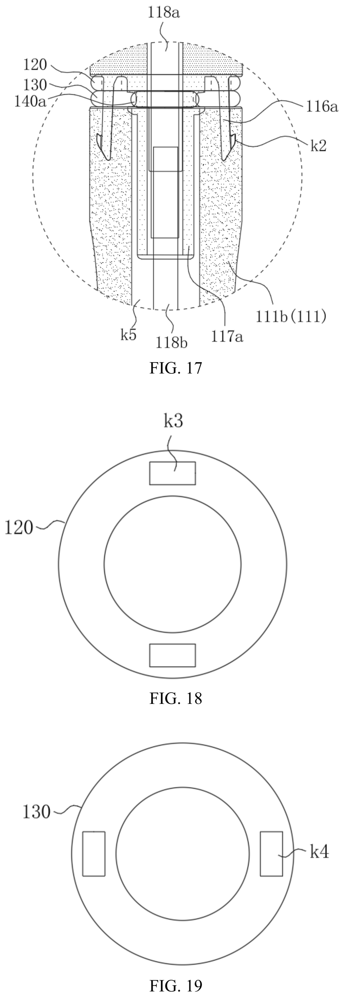

According to some embodiments of the present application, referring to FIGS. 3 and 4, and FIGS. 16 and 17, FIG. 16 is a structural view showing a photovoltaic connector assembly 100b according to other embodiments of the present application, with the first connector 110c and the second connector 110d not connected to each other, and FIG. 17 is a partial enlarged schematic view of region G in FIG. 12, where the two connectors are the first connector 110c and the second connector 110d. The first connector 110c includes a first connector main body 111a, and multiple buckle parts 116a are disposed at one end of the first connector main body 111a. The second connector 110d includes a second connector main body 111b, and multiple buckle holes k2 are formed at one end of the second connector main body 111b. The multiple buckle parts 116a and the multiple buckle holes k2 are engaged in a one-to-one correspondence (as shown in FIG. 17). When the first connector 110c is the target connector J2, the first connector main body 111a is the main body 111. When the second connector 110d is the target connector J2, the second connector main body 111b is the main body 111. The photovoltaic connector assembly 100b further includes a third sealing member 120. The third sealing member 120 engages with the multiple buckle parts 116a in a preset manner, so as to seal an interface between the first connector main body 111a and the second connector main body 111b when the first connector main body 111a and the second connector main body 111b are connected. The preset manner includes sleeving the third sealing member 120 over the multiple buckle parts 116a, or engaging the third sealing member 120 with the multiple buckle parts 116a via a plug-in connection.

Exemplarily, referring to FIGS. 16 and 17, the third sealing member 120 engages with the multiple buckle parts 116a via a plug-in connection. Referring to FIG. 18, FIG. 18 is a schematic structural view of a third sealing member 120 according to some embodiments of the present application. The third sealing member 120 is configured to be in a ring shape, and sockets k3 are formed on the third sealing member 120 and engage with the multiple buckle parts 116a in a one-to-one correspondence via a plug-in connection.

In this way, the sealing performance at the connection between the first connector main body 111a and the second connector main body 111b can be improved.

According to some embodiments of the present application, referring to FIGS. 3 to 4, and FIGS. 16 to 18, the third sealing member 120 is elastic, and is in a stretched state when the first connector main body 111a and the second connector main body 111b are connected.

Since the buckle part 116a has a certain elasticity, when the third sealing member 120 engages with the buckle parts 116a, the elasticity of the buckle parts 116a can be utilized to make the third sealing member 120 more closely fit between the first connector main body 111a and the second connector main body 111b, thereby further improving the sealing performance at the connection between the first connector main body 111a and the second connector main body 111b.

According to some embodiments of the present application, referring to FIG. 11, FIG. 17 and FIG. 19, FIG. 19 is a schematic structural view of a fourth sealing member 130 according to some embodiments of the present application. The photovoltaic connector assembly 100b further includes a fourth sealing member 130. The fourth sealing member 130 is disposed at one end of the second connector main body 111b to seal an interface between the first connector main body 111a and the second connector main body 111b when the first connector main body 111a and the second connector main body 111b are connected. The fourth sealing member 130 is elastic and has through holes k4 that engage with the multiple buckle parts 116a in a one-to-one correspondence. When the first connector main body 111a and the second connector main body 111b are connected, the fourth sealing member 130 is in a stretched state.

Since each buckle part 116a has a certain elasticity, when the fourth sealing member 130 engages with the buckle part 116a, the elasticity of the buckle part 116a enables the fourth sealing member 130 to more closely fit between the first connector main body 111a and the second connector main body 111b, thereby further improving the sealing performance at the connection between the first connector main body 111a and the second connector main body 111b.

In this way, by providing the third sealing member 120 and the fourth sealing member 130, a double sealing structure can be formed between the first connector main body 111a and the second connector main body 111b, thereby further improving the sealing performance.

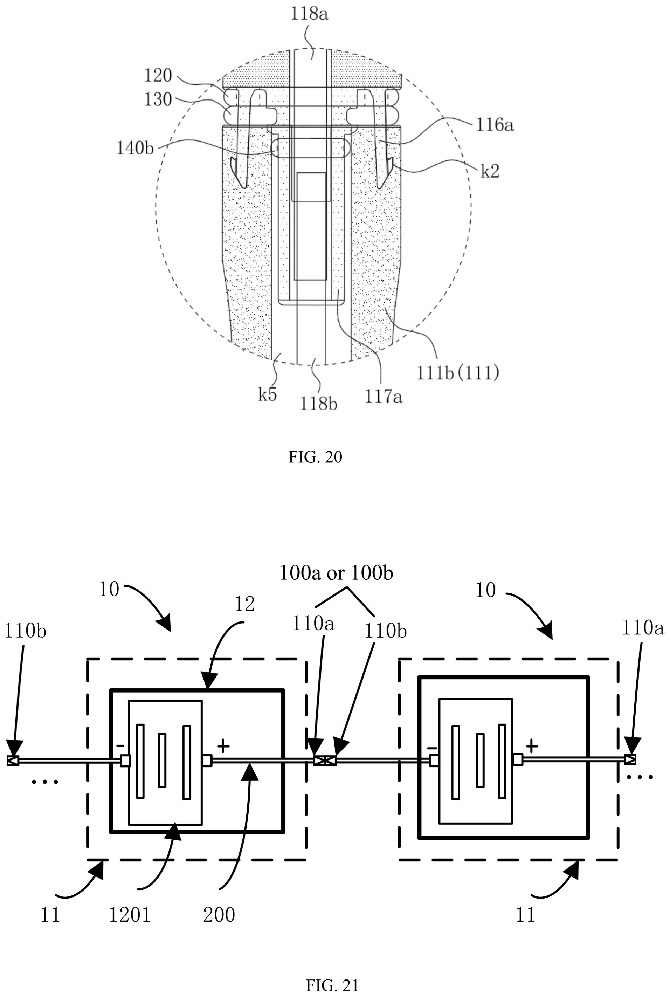

In the situations illustrated in FIGS. 12 and 17, in order to facilitate illustrating the engagement relationship between the buckle parts 116a and the third sealing member 120 and the fourth sealing member 130, the third sealing member 120 and the fourth sealing member 130 are not sectionally illustrated. With reference to FIG. 18, in FIG. 17, the sockets k3 in the third sealing member 120 are illustrated in dotted lines, and what shown in FIG. 20 hereinafter can also be understood with reference to FIG. 17, and is not repeatedly described.

According to some embodiments of the present application, continuing to refer to FIGS. 11 to 12, and FIGS. 16 to 17, the first connector 110c further includes a plugging part 117a disposed at one end of the first connector main body 111a. The plugging part 117a and the multiple buckle parts 116a are located at the same end of the first connector main body 111a, and the multiple buckle parts 116a are arranged around the plugging part 117a. A plugging hole k5 is further formed at one end of the second connector main body 111b. The plugging hole k5 and the multiple buckle holes k2 are located at the same end of the second connector main body 111b, and the multiple buckle holes k2 are arranged around the plugging hole k5. The plugging hole k5 engages with the plugging part 117a via plug-in connection. The photovoltaic connector assembly 100b further includes a fifth sealing member 140a. The fifth sealing member 140a is sleeved on the plugging part 117a to seal an interface between the first connector main body 111a and the second connector main body 111b when the first connector main body 111a and the second connector main body 111b are connected.

In this way, by providing the fifth sealing member 140a, the sealing performance at the plugging hole k5 can be further improved. In addition, since the multiple buckle parts 116a are arranged around the plugging part 117a, in combination with the third sealing member 120 and/or the fourth sealing member 130, a sealing structure is formed around the plugging hole k5, thereby further improving the sealing performance at the connection between the first connector main body 111a and the second connector main body 111b.

Taking FIG. 17 as an example, the fifth sealing member 140a may be located outside the plugging hole k5. Taking FIG. 20 as an example, FIG. 20 is a partial enlarged sectional view showing a plug-type engagement region between the first connector 110c and the second connector 110b according to still other embodiments of the present application. The fifth sealing member 140b can be disposed inside the plugging hole k5, which is not specifically limited herein. In FIGS. 17 and 20, in order to facilitate the illustration of the fifth sealing member, the fifth sealing member is illustrated with solid lines and not sectionally processed. In the photovoltaic connector assembly 100a illustrated in FIGS. 1 and 2, the structures involved, such as the buckle parts 116a, the plugging part 117a, the third sealing member 120, and the fourth sealing member 130, etc., can also be understood with reference to the above description and are not described in detail herein.

The material of the first connector main body 111a and the material of the second connector main body 111b are generally hard plastic. By providing the third sealing member 120 and/or the fourth sealing member 130 and/or the fifth sealing member, the risk of water vapor infiltration due to the gap at the connection between the first connector main body 111a and the second connector main body 111b can be reduced.

According to some embodiments of the present application, continuing to refer to FIGS. 3 to 4, and FIG. 12, a socket 118a is disposed within the first connector main body 111a, and a pin 118b is disposed within the second connector main body 111b. In FIGS. 3 and 4, the positions of the socket and the pin 118b are indicated by dashed lines. When the first connector main body 111a and the second connector main body 111b form a plug-in connection, the pin 118b is inserted into the socket 118a. The cable 200 at the first connector 110c is connected to the socket 118a, and the cable 200 at the second connector 110d is connected to the pin 118b. In this way, the cable 200 at the first connector 110c and the cable 200 at the second connector 110d are electrically connected.

In FIG. 12, FIG. 17 and FIG. 20, to clearly show the engagement relationship between the socket 118a and the pin 118b, the socket 118a and the pin 118b are shown with solid lines.

The photovoltaic connector assembly illustrated in some of the above-described embodiments can be applied to, but is not limited to, an offshore photovoltaic module 10. It will be appreciated that under the influence of waves at sea, the offshore photovoltaic module 10 will sway with the waves, exposing the components within the photovoltaic connector assembly to vibration. The photovoltaic connector assembly provided in the embodiments of the present application can utilize a combination of the first sealing member 113, the interlocking protrusions and recesses on the corresponding threaded structures, the threads with opposite thread directions, and the water-blocking component to achieve multiple positioning and limiting functions while improving sealing performance, thereby resisting vibrational forces and enhancing the stability and reliability of the whole structure. Furthermore, the use of the first through fifth sealing members, together with the water-blocking component, forms a multi-barrier water-blocking structure. Exemplarily, when water vapor enters along the gap between the engaged cable 200 and the connecting member and along the inner wall of the connecting member, the water-blocking path formed by the second sealing member 115, the water-blocking component 114a, 114b, and the first sealing member 113 is relatively long, thereby improving the water resistance and the sealing performance.

According to some embodiments of the present application, referring to FIG. 21, FIG. 21 is a schematic structural view of a photovoltaic module 10 according to some embodiments of the present application. Embodiments of the present application provide a photovoltaic module 10 including a photovoltaic cell module 11 and a photovoltaic junction box 12 mounted on the photovoltaic cell module 11. At least one connector 110a, 110b, 110c, or 110d of the photovoltaic connector assembly is arranged and connected to the photovoltaic junction box 12 of the photovoltaic module 10. The photovoltaic connector assembly is any one of the photovoltaic connector assemblies described above.

Exemplarily, in FIG. 21, the photovoltaic junction box 12 is disposed on the back side of a photovoltaic cell module 11. The photovoltaic junction box 12 includes a box body 1201, a cable 200 extending from the box body 1201, and a photovoltaic connector assembly 100a or 100b connected to the cable 200. The cable 200 includes a positive cable and a negative cable. The positive cable is connected to a first connector 110a of the photovoltaic connector assembly 100a or 100b, and the negative cable is connected to a second connector 110b of the photovoltaic connector assembly 100a or 100b. That is, the first connector 110a connected to the photovoltaic module 10 engages with the second connector 110b connected to the other photovoltaic module 10, thereby achieving an electrical connection between the photovoltaic module 10 and the other photovoltaic module 10 . By providing the photovoltaic connector assembly, multiple photovoltaic cell modules 11 can be electrically connected. It should be noted that only two photovoltaic modules 10 are illustrated in FIG. 21. Various implementations of the photovoltaic connector assembly 100a or 100b can be understood in conjunction with the contents described in the aforementioned embodiments, which will not described repeatedly herein.

The photovoltaic module has the same advantages as the photovoltaic connector assembly, which will not described repeatedly herein.

According to some embodiments of the present application, an embodiment of the present application provides a photovoltaic system, including the photovoltaic connector assembly 100a, 100b of any one of the above embodiments, or including at least two photovoltaic modules 10 in any one of the above embodiments. In an embodiment, the at least two photovoltaic modules 10 are connected in serials by the photovoltaic connector assembly 100a, 100b.

The photovoltaic system also has the same advantages as the photovoltaic connector assembly 100a, 100b or the photovoltaic module 10 mentioned above, which will not described repeatedly herein.

## Claims

1. A photovoltaic connector assembly (100a, 100b), **characterized by** comprising two connectors (110a and 110b, 110c and 110d) connected by plug-in connection, wherein at least one of the two connectors (110a and 110b, 110c and 110d) is a target connector (J1, J2), and the target connector (J1, J2) comprises:
a main body (111), one end of the main body (111) being plugged in and connected to another connector of the two connectors (110a and 110b, 110c and 110d);
a connecting member (112a, 112b), a first internal thread (1101) being disposed on one of another end of the main body (111) and the connecting member (112a,112b), and a first external thread (1102) being disposed on the other of the other end of the main body (111) and the connecting member (112a, 112b); and
a first sealing member (113), having a through channel (1131), wherein a second internal thread (1132) is disposed on an inner circumference surface of the through channel (1131), and a second external thread (1133) is disposed on an outer circumference surface of the through channel (1131); the second internal thread (1132) engages with the first external thread (1102); the second external thread (1133) engages with the first internal thread (1101); and the first sealing member (113) is connected to the main body (111) and the connecting member (112a, 112b) via threaded engagements, respectively;
wherein on any reference plane (E) containing the axis of the through channel (1131), an overlapping area of projections of the main body (111) and the first sealing member (113) at least partially overlaps an overlapping area of projections of the connecting member (112a, 112b) and the first sealing member (113); and the interior of the main body (111), the interior of the connecting member (112a, 112b), and the through channel (1131) collectively define a passage for passing a cable (200).

2. The photovoltaic connector assembly (100a, 100b) according to claim 1, wherein a first protrusion (1103) is disposed on one of the second internal thread (1132) and the first external thread (1102), and a first recess (1104) is formed on the other of the second internal thread (1132) and the first external thread (1102); and the first protrusion (1103) and the first recess (1104) are engaged to form a snap-fit connection;
optionally, the first protrusion (1103) is disposed on the second internal thread (1132), and the first recess (1104) is disposed on the first external thread (1102);
optionally, the first protrusion (1103) is disposed at a crest of the second internal thread (1132), and the first recess (1104) is disposed at a root of the first external thread (1102).

3. The photovoltaic connector assembly (100a, 100b) according to claim 1, wherein a second protrusion (1105) is disposed on one of the second external thread (1133) and the first internal thread (1101), and a second recess (1106) is disposed on the other of the second external thread (1133) and the first internal thread (1101); and the second protrusion (1105) and the second recess (1106) are engaged to form a snap-fit connection;
optionally, the second recess (1106) is disposed on the second external thread (1133), and the second protrusion (1105) is disposed on the first internal thread (1101);
optionally, the second recess (1106) is disposed at a crest of the second external thread (1133), and the second protrusion (1105) is disposed at a root of the first internal thread (1101).

4. The photovoltaic connector assembly (100a, 100b) according to claim 1, wherein a first protrusion (1103) is disposed on one of the second internal thread (1132) and the first external thread (1102), and a first recess (1104) is formed on the other of the second internal thread (1132) and the first external thread (1102); and the first protrusion (1103) and the first recess (1104) are engaged to form a snap-fit connection; and
a second protrusion (1105) is disposed on one of the second external thread (1133) and the first internal thread (1101), and a second recess (1106) is disposed on the other of the second external thread (1133) and the first internal thread (1101); and the second protrusion (1105) and the second recess (1106) are engaged to form a snap-fit connection;
optionally, the first protrusion (1103) is disposed on the second internal thread (1132), and the first recess (1104) is disposed on the first external thread (1102); the second protrusion (1105) is disposed on the first internal thread (1101), and the second recess (1106) is disposed on the second external thread (1133); and the second recess (1106) and the first protrusion (1103) are arranged in a one-to-one correspondence, and the first protrusion (1103) is formed by a depression of the second recess (1106); or
the first recess (1104) is disposed on the second internal thread (1132), and the first protrusion (1103) is disposed on the first external thread (1102); the second recess (1106) is disposed on the first internal thread (1101), and the second protrusion (1105) is disposed on the second external thread (1133); and the first recess (1104) and the second protrusion (1105) are arranged in a one-to-one correspondence, and the second protrusion (1105) is formed by a depression of the first recess (1104).

5. The photovoltaic connector assembly (100a, 100b) according to any one of claims 1 to 4, wherein a thread direction of the second internal thread (1132) is opposite to a thread direction of the second external thread (1133).

6. The photovoltaic connector assembly (100a, 100b) according to any one of claims 1 to 4, wherein the target connector (J2) further comprises a water-blocking component (114a, 114b) disposed in the passage; and
the water-blocking component (114a, 114b) comprises a base body (1141a, 1141b) and a plurality of water-blocking particles (1142); the base body (1141a,1141b) has a through-going accommodation cavity (Q) connected to the passage; the accommodation cavity (Q) is configured for passing the cable (200); and the plurality of water-blocking particles (1142) are disposed inside the accommodation cavity (Q).

7. The photovoltaic connector assembly (100a, 100b) according to claim 6, wherein the base body (1141a, 1141b) is connected to a downstream side of the first sealing member (113) in a direction pointing from the main body (111) to the connecting member (112b).

8. The photovoltaic connector assembly (100a, 100b) according to claim 7, wherein an opening (k1) is formed on a side of the base body (1141a, 1141b) facing away from the first sealing member (113), and the opening (k1) is connected to the accommodation cavity (Q).

9. The photovoltaic connector assembly (100a, 100b) according to claim 8, wherein the connecting member (112b) is configured as a nut, and the connecting member (112b) has a threaded section (1121) and a mating section (1122) provided therein sequentially in the direction pointing from the main body (111) to the connecting member (112b); and
the threaded section (1121) is provided with the first internal thread (1101); the other end of the main body (111) is provided with the first external thread (1102); and the mating section (1122) is configured to accommodate at least a portion of the base body (1141a, 1141b);
optionally, the target connector (J2) further comprises a second sealing member (115), and the second sealing member (115) is disposed in the passage and located between an end wall (1123) of the connecting member (112b) and the base body (1141a, 1141b).

10. The photovoltaic connector assembly (100a,100b) according to claim 6, wherein the accommodation cavity (Q) converges or diverges in a direction pointing from the main body (111) to the connecting member (112b); and
a section of the accommodation cavity (Q) is perpendicular to the direction pointing from the main body (111) to the connecting member (112b).

11. The photovoltaic connector assembly (100a, 100b) according to any one of claims 1 to 4, wherein the two connectors are a first connector (110a, 110c) and a second connector (110c, 110d); the first connector (110a, 110c) comprises a first connector main body (111a), and multiple buckle parts (116a) are disposed at one end of the first connector main body (111a); the second connector (110b, 110d) comprises a second connector main body (111b), and multiple buckle holes (k2) are formed at one end of the second connector main body (111b); the multiple buckle parts (116a) and the multiple buckle holes (k2) are engaged in a one-to-one correspondence;
when the first connector (110a, 110c) is the target connector (J1, J2), the first connector main body (111a) is the main body (111); when the second connector (110b, 110d) is the target connector (J1, J2), the second connector main body (111b) is the main body (111); and
the photovoltaic connector assembly (100a, 100b) further comprises a third sealing member (120); the third sealing member (120) engages with the multiple buckle parts (116a) in a preset manner to seal an interface between the first connector main body (111a) and the second connector main body (111b) when the first connector main body (111a) and the second connector main body (111b) are connected; and the preset manner comprises sleeving the third sealing member (120) over the multiple buckle parts (116a), or engaging the third sealing member (120) with the multiple buckle parts (116a) via a plug-in connection.

12. The photovoltaic connector assembly (100a, 100b) according to claim 11, wherein the third sealing member (120) is elastic, and is in a stretched state when the first connector main body (111a) and the second connector main body (111b) are connected; or
the photovoltaic connector assembly (100a,100b) further comprises a fourth sealing member (130); wherein the fourth sealing member (130) is disposed at one end of the second connector main body (111b) to seal an interface between the first connector main body (111a) and the second connector main body (111b) when the first connector main body (111a) and the second connector main body (111b) are connected; and the fourth sealing member (130) is elastic, and has through holes (k4) engaging with the multiple buckle parts (116a) in a one-to-one correspondence; and the fourth sealing member (130) is in a stretched state when the first connector main body (111a) and the second connector main body (111b) are connected.

13. The photovoltaic connector assembly (100a, 100b) according to claim 11, wherein the first connector (110c) further comprises a plugging part (117a) disposed at one end of the first connector main body (111a); the plugging part (117a) and the multiple buckle parts (116a) are located at the same end of the first connector main body (111a), and the multiple buckle parts (116a) are arranged around the plugging part (117a);
a plugging hole (k5) is further formed at one end of the second connector main body (111b), and the plugging hole (k5) and the multiple buckle holes (k2) are located at the same end of the second connector main body (111b); the multiple buckle holes (k2) are arranged around the plugging hole (k5); the plugging hole (k5) engages with the plugging part (117a) via plug-in connection; and
the photovoltaic connector assembly (100b) further comprises a fifth sealing member (140a, 140b); the fifth sealing member (140a, 140b) is sleeved on the plugging part (117a) to seal an interface between the first connector main body (111a) and the second connector main body (111b) when the first connector main body (111a) and the second connector main body (111b) are connected.

14. A photovoltaic module (10), comprising a photovoltaic cell module (11), and a photovoltaic junction box (12) mounted on the photovoltaic cell module (11); wherein at least one connector (110a, 110b, 110c, 110d) of the photovoltaic connector assembly (100a,100b) according to any one of claims 1 to 13 is arranged and connected to the photovoltaic junction box (12).

15. A photovoltaic system, comprising the photovoltaic connector assembly (100a, 100b) according to any one of claims 1 to 14, or at least two photovoltaic modules (10) according to claim 14.
